# EUROPEAN PATENT APPLICATION

(11) **EP 4 231 172 A1**
(43) Date of publication of application: **23.08.2023**
(21) Application number: 23154898.3
(22) Date of filing: 03.02.2023
(51) Int. Cl.: G06F 16/9032

(54) **ASPECT-AWARE AUTOCOMPLETE QUERY**

(30) Priority: 18.02.2022 US 202217675020
(71) Applicant: eBay, Inc., San Jose, CA 95125 (US)
(72) Inventor: CHEN, Xi, San Jose, 95125 (US); GAO, Mengyi, San Jose, 95125 (US); JIANG, Xueyuan, San Jose, 95125 (US); WU, Xiaoyuan, San Jose, 95125 (US); XU, Canran, San Jose, 95125 (US); XU, Daqi, San Jose, 95125 (US); ZHENG, Wenhao, San Jose, 95125 (US)
(74) Representative: Müller-Boré & Partner Patentanwälte PartG mbB

(57) **Abstract**

A refinement option recommendation system provides suggestions for completed search queries and refinement options. Upon receiving, at a search engine for a site, a portion of a search query from a user, the refinement option recommendation system determines a completed search query based on the portion of the search query. For example, if the portion includes "bak" or "baking," the completed search query suggestion may include "baking recipe books" or "baking ingredients." The refinement option recommendation system also determines a refinement option associated with the completed search query based on historical queries. For example, the refinement option may include recipe books associated with a particular culture based on historical queries by the user or by other users. As such, a first suggestion for the completed search query and a second suggestion for the refinement option are both provided to the user.

## Description

### BACKGROUND

Many search systems allow users to submit search queries. For instance, a user may input a search term at a search engine and receive results associated with the search term. Upon providing the search results to the user, the search engine may provide refinement options to the user for subsequent selection to narrow the search results further. For example, if a user provides the search term "book," the user may subsequently receive search results for books and selectable refinement options, such as "children's books" or "text books." While refinement options provide users with options to further refine their searches upon subsequent selection of the refinement options, existing search systems often do not provide search results that satisfy an intent of the user. Additionally, existing search systems also fail to provide search results satisfying the intent of the user even after the user selects a refinement option.

### SUMMARY

At a high level, aspects described herein relate to providing a suggestion for a refinement option for a search query or for a portion of search query prior to providing the user with search results, thereby eliminating or reducing the need for repetitive user queries, search result selections, search filter selections, and the like by enabling a search engine to initially return search results based on content usage that matches an intent of a user. In accordance with aspects of the technology described herein, a search query or a portion of a search query is received (but not submitted), at a search engine for a site, from a user. As an example, a portion of a search query may include "nov" and a completed search query may include "novel." In response to receiving the portion of the search query, a completed search query is determined based on the portion of the search query. A refinement option, associated with the completed search query, is determined based on historical queries. In aspects, the historical queries may be associated with the user or with other users. In some aspects, the historical queries are associated with other users similar to the user. In response to determining the refinement option, a suggestion for the refinement option is provided prior to providing search results for the completed search query.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 is a block diagram of an example operating environment suitable for implementing aspects of the technology;
FIGS. 2A and 2B are example user interfaces providing suggestions for refinement options, according to an aspect of the technology described herein;
FIGS. 3A and 3B are example user interfaces providing suggestions for refinement options, according to an aspect of the technology described herein;
FIG. 4 is a flow diagram showing a method for providing a suggestion for a refinement option, in accordance with an aspect of the technology described herein; and
FIG. 5 is an example computing device suitable for implementing the described technology, in accordance with an aspect described herein.

### DETAILED DESCRIPTION

The subject matter of aspects of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

In addition, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (*a* or *b* thus includes either *a* or *b,* as well as *a* and *b*)*.*

While search engines are an incredibly useful tool for providing search results for received search queries, shortcomings in existing search technologies often result in the consumption of an unnecessary quantity of computing resources (e.g., I/O costs, network packet generation costs, throughput, memory consumption, etc.). When performing searches, users are often seeking particular search results. For instance, in the context of product search, a user may be seeking a particular item that has a particular style, design, or color. Existing search technologies often comingle search results or provide search results that are too vast and broad, which then requires the user to submit additional search queries or multiple filters to obtain the desired search results pertaining to the particular item.

For example, a search engine may receive a query for "men's pants" and subsequently provide a set of search results comprising pants with various sizes, colors, patterns, styles, and brands. The user may browse multiple pages of the search results and select multiple filters to access the particular "men's pants" that the user desires. This process of browsing, and filter selection unnecessarily consumes various computing resources of the search system, such as processing power, network bandwidth, throughput, memory consumption, etc. In some instances, the multiple pages of the search results provided by the existing search engine may even completely fail to satisfy the user's goal (e.g., formal men's pants of a particular style), thus requiring the user to spend even more time and computing resources on the search process by repeating the process of issuing additional queries and selecting more filters until the user finally accesses the desired content items. In some cases, the user may even give up searching because the search engine was not able to return desired search results after multiple searches.

These shortcomings of existing search technologies adversely affect computer network communications. For example, each time a query is received, contents or payload of the search queries is typically supplemented with header information or other metadata, which is multiplied by all the additional queries needed to obtain the particular item the user desires. As such, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if multiple users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time. Users who make multiple selections after initially submitting a query would be better serviced by making a more efficient and more effective search query initially that includes search terms comprising the various aspects, attributes, or interests in which the user is initially seeking for a particular item.

Aspects of the technology described herein provide for improvements that better service searches of particular items. For example, aspects of the technology described herein improve the functioning of the computer itself in light of these shortcomings in existing search technologies by providing a solution that enables a search engine to provide suggested refinement options based on historical queries, thereby enabling the search engine to provide search results that match a user's intent. In particular, some aspects are directed to a search engine capable of providing the suggestion for the refinement option prior to the user submitting a search query. To facilitate this, the search engine receives a portion of a search query from a user. A completed search query is determined based on the portion of the search query. A refinement option associated with the completed search query is determined based on historical queries (e.g., historical queries by the user or other users and associated with prior user interaction data, such as item listings and corresponding images). A first suggestion for the completed search query and a second suggestion for the refinement option are provided (e.g., via a display on a computing device).

In accordance with some aspects, the technology described herein leverages prior user interaction data to provide a personalized or popular refinement option to the user prior to the user providing the completed search query and prior to providing the user with search results. For instance, the refinement option may be determined based on prior user interaction data associated with clicks, views, and purchases of items associated with the completed search query. For example, items associated with the completed search query (e.g., "bookshelf," wherein the portion of the search query is "book") may include items commonly purchased with the item of the completed search query (e.g., bookcases, decorative books, and bookends). Items, for example, may be tangible (e.g., a deck of cards), intangible (e.g., software), or something that has a distinct and separate existence from other things (e.g., a subscription to an audible book collection for a period of time).

Additionally, the refinement option may be determined based on identified interests of the user. For example, the user may have an interest in formal dresses from a particular distributor, the interest identified based on a number purchases of formal dresses from the particular distributor. In aspects, the identified interests of the user may be further utilized to identify prior user interactions of other users who are similar to the user for determining the suggested refinement option. For example, similar users may include users having a number of common identified interests above a threshold. In embodiments, a similar user may be identified for a first entry of a portion of a search query, but that user may not be identified for a second entry of a portion of a search query based on corresponding identified interests associated with each of the first and second entries.

Further, in other configurations, multiple refinement options are suggested to the user. For example, multiple refinement options may be determined based on historical queries associated with the completed search query. In some embodiments, multiple refinement options are provided for each of a plurality of completed search queries previously determined. Suggestions for the plurality of completed search queries may be provided to the user concurrently with the multiple refinement options. In aspects, multiple refinement options are determined by ranking interests of the user based on a relevance of each interest to the completed search query. In embodiments, the multiple refinement options are displayed to the user via a user interface and listed in an order associated with the ranking. The multiple refinement options are provided to the user prior to providing search results and prior to the user submitting the completed search query.

Aspects of the technology described herein provide a number of improvements over existing search technologies. For instance, computing resource consumption is improved relative to existing technologies. In particular, the recommendation to use a suggested refinement option prior to the user submitting the completed search query and prior to the search engine providing search results enables the search engine to return search results, upon a user selection of the suggested refinement option, matching an intent of the user; thereby allowing the search engine to more quickly provide relevant search results. The search engine enables the user to quickly provide an intended search query for the retrieval of relevant results for a particular item desired by the user; or in some instances, to discover another item that the user was unaware of but would be interested in based on the user's intent.

As such, aspects of the present technology eliminate (or at least reduce) the repetitive user queries and filter selections of existing search technologies because the search results of the present technology comprise results that more closely correspond to what the user is seeking. Accordingly, aspects of the technology described herein decrease computing resource consumption, such as processing power and network bandwidth. For instance, a user query (e.g., an HTTP request), would only need to traverse a computer network once (or fewer times relative to existing technologies) as a result of using the suggested completed search query and refinement option.

In like manner, aspects of the technology described herein improve storage device or disk I/O and query execution functionality. As described above, the inadequate search results provided by existing search technologies result in repetitive user queries and filter selections. Repetitive and multiple queries and filter selections cause multiple traversals to disk I/O. In contrast, aspects described herein reduce storage device I/O because the user provides a reduced amount of inputs so the computing system does not have to reach out to the storage device as often to perform a read or write operation. For example, by providing a suggested refinement option in response to receiving a portion of a search query and prior to the search engine providing search results for a completed search query to the user, the search engine can subsequently respond with search results that satisfy the user intent based on the suggested refinement option. Accordingly, there is not as much wear due to query execution functionality.

Having briefly described an overview of aspects of the technology described herein, an exemplary operating environment in which aspects of the technology described herein may be implemented is described below.

Turning now to FIG. 1, a block diagram is provided showing an operating environment 100 in which aspects of the present disclosure may be employed. It should be understood that this and other arrangements described herein are set forth only as examples. Other arrangements and elements (e.g., machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

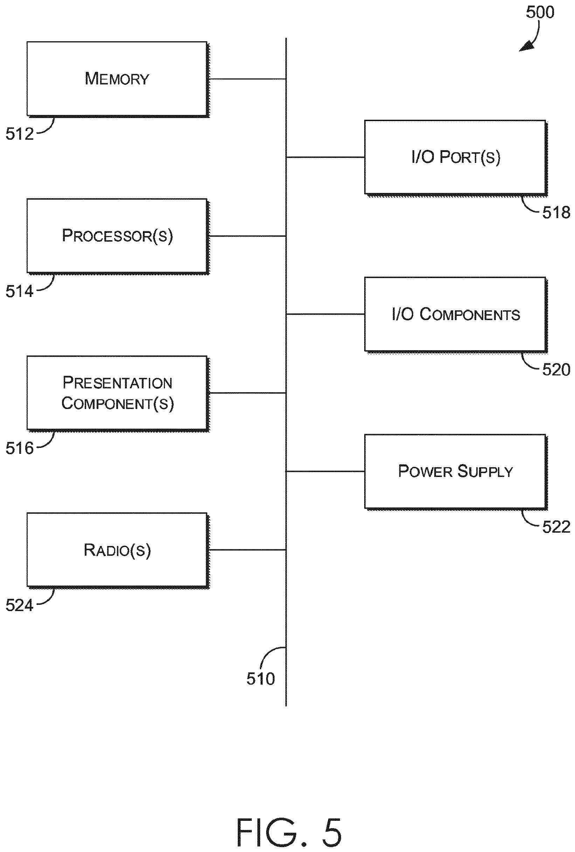

Among other components not shown, example operating environment 100 includes a network 102; a computing device 104 having a client interface component 106; search engine 108 having a search and extraction module 110, an analysis module 112, a recommendation module 114, and an output module 116; and historical queries 130. It should be understood that environment 100 shown in FIG. 1 is an example of one suitable operating environment. Each of the components shown in FIG. 1 may be implemented via any type of computing device, such as computing device 500, described below in connection to FIG. 5, for example.

These components may communicate with each other via the network 102, which may include, without limitation, one or more local area networks (LANs) and/or wide area networks (WANs). In exemplary implementations, the network 102 comprises the Internet and/or a cellular network, amongst any of a variety of possible public and/or private networks. Network 102 may use protocols such as Hypertext Transfer Protocol (HTTP), HTTP Secure, Constrained Application Protocol, Message Queue Telemetry Transport, and so forth. In aspects, the network 102 may include multiple networks, as well as being a network of networks, but is shown in more simple form so as to not obscure other aspects of the present disclosure.

It should be understood that any number of user devices, servers, and data sources may be employed within the operating environment 100 within the scope of the present disclosure. Each may comprise a single device or multiple devices cooperating in a distributed environment. For instance, the search engine 108 may be provided via multiple devices arranged in a distributed environment that collectively provide the functionality described herein. Additionally, other components not shown may also be included within the distributed environment.

The computing device 104 can be a client device on the client-side of the operating environment 100, while the search engine 108 can be on the server-side of operating environment 100. For example, the search engine 108 can comprise server-side software designed to work in conjunction with client-side software on the computing device 104 so as to implement any combination of the features and functionalities discussed in the present disclosure. This division of the operating environment 100 is provided to illustrate one example of a suitable environment, and there is no requirement for each implementation that any combination of the search engine 108 and the computing device 104 remain as separate entities. While the operating environment 100 illustrates a configuration in a networked environment with a separate computing device, search engine, and historical queries, it should be understood that other configurations can be employed in which components are combined. For instance, in some configurations, a computing device may also serve as a data source and/or may provide search capabilities.

The computing device 104 may comprise any type of computing device capable of use by a user. For example, in one aspect, the computing device 104 may be the type of computing device 500 described in relation to FIG. 5 herein. By way of example and not limitation, a computing device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where search queries may be performed via the client interface component 106 or where notifications can be presented via the client interface component 106. A user may be associated with the computing device 104. The user may communicate with the search engine 108 through one or more computing devices, such as the computing device 104.

At a high level, the search engine 108 receives a portion of a search query from the computing device 104 (or another computing device not depicted). In aspects, the portion of the query may be received upon the user typing or speaking into the computing device 104, or a combination thereof. In aspects, the portion of the query may be received upon the user writing with an electronic pen on the client interface component 106. The search query may comprise any type of input from a user for initiating a search. In response to receiving the portion of the search query, the search engine 108 determines whether the portion of the search query is a completed search query. For example, if the portion of the search query is an incomplete search query, search engine 108 determines a completed search query. Upon determining the completed search query, the completed search query may be provided to the user for display on client interface component 106.

In aspects, search engine 108 recognizes that the user is still typing, speaking, or using the electronic pen, for example. The search engine 108 may determine, based on the user still typing, speaking, or drawing via the electronic pen, that the portion of the search query is an incomplete search query. Upon determining the search query is an incomplete search query, search engine 108 may determine the completed search query in real-time (e.g., contemporaneously with a keystroke, audio input, or doodle via the electronic pen). In aspects, search engine 108 identifies a language associated with the portion of the search query and determines the completed search query based on the language identified. For example, search engine 108 may identify more than one language associated with the portion of the search query (e.g., a user searching for a shirt that has a phrase in French).

In embodiments, the completed search query is determined using the portion of the search query, which is associated with a natural language input of one or more words or a partial word. For example, the completed search query may comprise one or more characters or words that are absent from the portion of the search query. In aspects, the search engine 108 determines the completed search query using n-gram analysis (e.g., analysis on contiguous characters being input, contiguous strings of characters being input, or contiguous words and partial words being input). Informal and formal natural language inputs may be identified and transformed into a machine-readable and structured representation of a completed search query. An item may be discerned from the completed search query.

In aspects, the completed search query is associated with an item (e.g., an item for sale by a seller via an e-commerce computing-environment associated with an application or website). Further, the item may be associated with an item listing (e.g., a description relating to the item comprising one or more of a price in a currency, reviews, shipment options, a rating, a condition of the item, a size of the item, a color of the item, etc.). In aspects, the item is associated with one or more categories including meta-categories and leaf categories. For example, the meta-categories are each divisible into subcategories (or branch categories), whereas leaf categories are not divisible. In one non-limiting example, meta-categories may include, from broadest meta-category to the narrowest meta-category, "collectibles," "cards," and "baseball cards"; and a leaf category for the "baseball cards" meta-category may include baseball cards for a particular player during a particular year.

In some configurations, the search engine 108 may be embodied on one or more servers. In other configurations, the search engine 108 may be implemented at least partially or entirely on a user device, such as computing device 104 or computing device 500 described in FIG. 5. The search engine 108 (and its components) may be embodied as a set of compiled computer instructions or functions, program modules, computer software services, or an arrangement of processes carried out on one or more computer systems.

As shown in FIG. 1, the search engine 108 includes the search and extraction module 110, the analysis module 112, the recommendation module 114, and the output module 116. In one aspect, the functions performed by modules of the search engine 108 are associated with one or more personal assistant applications, services, or routines. In particular, such applications, services, or routines may operate on one or more user devices (such as computing device 104) or servers (e.g., the search engine 108), or may be distributed across one or more user devices and servers. In some aspects, the applications, services, or routines may be implemented in the cloud. Moreover, in some aspects, these modules of the search engine 108 may be distributed across a network, including one or more servers and client devices (such as computing device 104), in the cloud, or may reside on a user device such as computing device 104.

In addition, the modules of the search engine 108 and the functions and services performed by these modules may be implemented at appropriate abstraction layer(s) such as an operating system layer, an application layer, or a hardware layer, etc. Alternatively, or in addition, the functionality of these modules (or the aspects of the technology described herein) can be performed, at least in part, by one or more hardware logic components. For instance, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Further, although functionality is described herein with regards to specific modules shown in search engine 108, it is contemplated that in some aspects, functionality of one of the modules can be shared or distributed across other modules.

The search and extraction module 110 identifies prior user interaction data of the user, of other users, or of other similar users in response to receiving the portion of the search query processed against historical queries 130 (the historical queries 130 being described in more detail below). For example, the module 110 may query the historical queries 130 to identify stored prior user interactions with a site of the search engine 108. The search and extraction module 110 may also determine one or more items (including categories) associated with the item identified within the portion of the search query. In some aspects, prior user interaction data includes item listing data of the one or more items, such as one or more prices offered for sale and one or more prices associated with one or more purchases by the user (or by other users or other similar users). In some aspects, item listing data may include quality, condition, ranking, material, brand, manufacturer, etc., associated with the one or more items. In some aspects, prior user interaction data may include a time stamp associated with a view or a purchase of the one or more items, the view or purchase corresponding to the user, other users, or other similar users.

In some embodiments, module 110 may identify a set of items associated with the portion of the search query that the user purchased (e.g., the portion of the search query including "peanut" and the set of items including peanut butter, cocktail peanuts, sea salted Valencia peanuts, and cocoa peanuts). In aspects, module 110 identifies the set of items associated with the portion of the search query that the user placed in a shopping cart, viewed for a certain period of time, or added to a wish list. In a like manner, the module 110 may identify a set of items associated with the portion of the search query that other users purchased, viewed over a threshold period of time, or placed in a shopping cart or added to a wish list but has not yet purchased (e.g., the portion of the search query including "peanut" and the set of items other users viewed or purchased over the threshold period of time including sea salted cocoa peanuts and cocoa peanut butter).

In embodiments, the one or more items associated with the item identified within the portion of the search query may be identified based on an aspect (e.g., related to an appearance) of the item, an attribute (e.g., related to a characteristic or quality) of the item, or a category (e.g., a meta-category or a leaf category) of the item. For example, the portion of the search query including "peanut" may have an aspect including "red skinned" peanuts, an attribute including "raw" peanuts, and a category including "packaged snacks" meta-category. In embodiments, prior user interactions stored in historical queries 130 are indexed by attributes (e.g., indexing peanuts by seasoning and point of origin of the peanut). In embodiments, prior user interactions stored in historical queries 130 are indexed by aspects or categories. In embodiments, prior user interactions stored in historical queries 130 are tagged with corresponding attributes, aspects, or categories. As such, the module 110 may identify the one or more items and corresponding prior user interactions using one or more tags or indexes.

The analysis module 112 determines one or more refinement options to suggest to the user inputting the portion of the search query. The analysis module 112 makes the determination based on the historical queries 130 associated with the portion of the search query and based on the actions of the search and extraction module 110. For instance, when module 110 processes the portion of the search query prior to receiving the completed search query to identify prior user interaction data, analysis module 112 may determine to suggest the one or more refinement options based on the identified prior user interaction data. For example, the one or more refinement options may be determined based on prior refinement options selected by the user or other users, feedback provided by the user or other users, the prior user interaction data being identified based on interactions with the one or more items associated with the portion of the search query.

As an example, analysis module 112 determines aspects and attributes associated with an item of a completed search query. Continuing the example, the completed search query may be "women's heels"; the item of the completed search query is a shoe with a heel for women; the aspects include a color and degree of luster; and the attributes include brand, style (e.g., open toe), heel length, heel thickness, and size. In response to search and extraction module 110 parsing historical queries 130 and extracting prior user interactions by the user associated with the aspects and attributes, analysis module 112 determines a refinement option suggestion for display to the user based on the prior user interactions. For instance, the analysis module 112 determines a number of purchases or views being over a threshold, the number of purchases or views being associated with women's heels and one or more aspects or attributes. To illustrate, the user may have previously purchased one or more pairs of heels having a particular size and a plurality of heels having a particular color scheme. In some embodiments, the threshold for purchasing the one or more pairs of heels having the particular size is a lower threshold number than the threshold for purchasing the heels having the particular color scheme, since the shoe size is less likely to change compared to the color scheme preference of the user. Accordingly, analysis module 112 may thus determine to suggest the particular size or the particular color scheme as the refinement option.

In some embodiments, the analysis module 112 compares prior user interactions of the user to that of other users. For example, based on search and extraction module 110 identifying and extracting prior user interactions by the user associated with color scheme aspects of the items associated with women's heels and prior user interactions by the other users with various color schemes of women's heels, analysis module 112 determines that the user has not yet viewed a particular color scheme of heels that is popular with other users. By comparing the prior views by the user with the prior views by the other users, analysis module 112 determines to provide the refinement option associated with the popular color scheme that the user has not yet viewed. As another example, analysis module 112 compares prior user interactions of the user associated with attributes to prior user interactions of other users associated with aspects. Continuing the example, analysis module 112 determines prior user interactions by the user indicate that the user has a preference of heels having a particular thickness and height; and that prior user interactions by other users indicate that a particular rhinestone pattern is popular among users who have interacted with heels having similar thickness and height. As such, analysis module 112 determines that refinement options for the particular thickness and height and the particular rhinestone pattern should be provided to the user.

In some embodiments, analysis module 112 determines which refinement option to present or which refinement option of a plurality of refinement options to display at the top of a list based on ranked aspects, ranked attributes, or a combination thereof. For example, the attributes and aspects may be ranked based on prior user interactions associated with the user. Continuing the example, the completed search query is "Brand Z baseball cleats"; analysis module 112 determines the user previously purchased a plurality of running shoes of Brand Z, each of the plurality of running shoes comprising white and black colors making up various percentages of the total outer and viewable surface area of the running shoes. Based on the number of purchases of the running shoes by the user, analysis module 112 ranks the black to white ratios of colors and determines that the black to white ratio of 5:4 has the highest ranking. Based on this color scheme having the highest ratio, analysis module 112 determines to suggest to the user, who is shopping for Brand Z baseball cleats, a refinement option for the 5:4 black to white color scheme.

In some embodiments, the analysis module 112 ranks the prior user interactions based on a similarity score associated with the completed search query. For example, the completed search query is "celestial t-shirts" and prior user interactions (of the user or other users) associated with the completed search query include views, clicks, and purchases of zodiac t-shirts, solar system t-shirts, milky way t-shirts, NASA t-shirts, Hubble t-shirts (e.g., Hubble telescope, Edwin Hubble), and Sputnik t-shirts. Prior views, clicks, and purchases of these t-shirts may be ranked based on a similarity score to the "celestial t-shirts" completed search query. For example, milky way t-shirts associated with the chocolate bar would be ranked lower than milky way t-shirts associated with the galaxy. As another example, NASA t-shirts having images of stars or galaxies can be ranked as having a similarity score higher than NASA t-shirts only having the "NASA" logo. These rankings may be determined using images from associated item listings or from words within the associated item listings.

As another example, analysis module 112 may determine similarity scores using cosine similarity, chi-squared correlation, vector distance measurements in a vector space model, and so forth. In some aspects, the vector distance measurements are associated with words of the item listings or images within the item listings. Continuing the example, vectors associated with the words of the item listings are compared with semantic vector representations of the completed search query. In some aspects, the vectors are associated with leaf categories. Additionally, semantic relevance between vectors may be measured using cosine similarity, for example. In some embodiments, machine learning is used to determine similarity scores. In embodiments, the Hubble t-shirts having images of exoplanets may have higher similarity scores than Hubble t-shirts depicting telescopes or Edwin Hubble for the "celestial t-shirts" completed search query, the similarity scores determined using cosine similarity to measure the semantic relevance between keywords within item listings of the Hubble t-shirts and "celestial t-shirts."

In embodiments, a plurality of interests pertaining to the user are identified using historical queries 130. For example, analysis module 112 may determine the plurality of interests based on profile information of the user. Profile information may include gender information, shipping location information, age, and user "likes" of items. For example, analysis module 112 may determine that the user "likes" and prior user interactions including purchases indicate that the user has an interest in a particular brand of perfume. Further, the prior purchases may indicate the user has an interest in purchasing that brand of perfume when it is within a particular price range. Furthermore, analysis module 112 may rank the plurality of interests based on a relevance to the completed search query.

For instance, interests indicated by the user profile and the prior user interaction data may include interests in 1980s history books, the particular brand of perfume within the price range, and romance novels; and the completed search query may include "Italian perfumes." As such, analysis module 112 may rank refinement options for "Italian perfumes" based on how relevant the interests are. For example, a refinement option for a Versace perfume initially distributed during the 1980s that is within the price range may have a higher ranking than a refinement option for a Christian Dior perfume 1947 fragrance that is within the price range.

In embodiments, refinement options associated with similar interests may be ranked higher based on items associated with those interests having higher clickthrough rates or higher rankings determined from user-provided feedback. For example, refinement options for a completed search query of "WWII books" that are associated with a plurality of interests indicated by the user's profile and the prior user interactions (e.g., the plurality of interests including Anne Frank and the Dutch resistance) may be ranked additionally based on particular authors of the WWII book associated with Anne Frank or the Dutch resistance having higher clickthrough rates, purchases, or ratings associated with those books or with other books on other topics. As such, analysis module 112 may rank a refinement option for an author of a WWII Dutch resistance book higher than a WWII Dutch resistance book having an overall lower rating. Based on the rankings, the highest ranked refinement option may be provided to the user via client interface component 106.

Based on the analysis module 112, recommendation module 114 may provide one or more suggestions to the user for one or more refinement options for the portion of the search query provided by the user. In embodiments, the suggestion is provided via the client interface component 106. In embodiments, recommendation module 114 may automatically provide the one or more refinement option suggestions before the user inputs a completed search query and before returning search results to the user. In embodiments, recommendation module 114 also provides a suggestion for the user for the completed search query based on the portion of the search query. The recommendation module 114 may provide the completed search query suggestion contemporaneously with the refinement option suggestion. The recommendation module 114 may provide both the completed search query suggestion and the refinement option suggestion prior to the user completely typing in the completed search query and before returning search results to the user.

In embodiments, the recommendation module 114 may provide the completed search query suggestion and a list of refinement options to the user before the user submits the completed search query for search results. In response to providing the list of refinement options, the search engine 108 may receive a selection of one of the refinement options from the user for a search associated with both the completed search query and the selected refinement option. Based on the user solely typing the portion of the search query and selecting the refinement option, the search engine 108 may provide search results to the user that accurately reflect an intent of the user. The search results may each be associated with an item listing comprising images.

The output module 116 is configured to provide recommendations from recommendation module 114 to the computing device 104 and other client interfaces. Additionally, the output module 116 may be configured to communicate the one or more suggested refinement options and the search results associated with the portion of the search query and the selected refinement option to other modules of search engine 108, such as the analysis module 112 for example. The output module 116 may also be configured to communicate the one or more suggested refinement options and the search results associated with the portion of the search query and the selected refinement option to historical queries 130 for storage. The output module 116 may also be configured to communicate with historical queries 130 for transmission of item listings associated with the search results from the portion of the search query and the selected refinement option.

The historical queries 130, in some embodiments, may be embodied on a plurality of databases, wherein one or more of the databases comprise one or more hardware components that are part of the search engine 108. In aspects, the one or more of the databases are configured for storing information regarding prior user interaction data from a plurality of users, including, for instance, search queries submitted by a plurality of users via client interface components (e.g., client interface component 106), search results associated with the historical search queries, item listings for the search results, prior user interactions with the search results (e.g., hovers, clicks, purchases, feedback provided, view times, returns, reasons for returns, refinement options selected for a particular search query, etc.) and so forth. In some embodiments, the historical queries 130 store a timestamp (e.g., day, hour, minute, second, etc.) for each prior user interaction.

In addition, the prior user interaction data stored in historical queries 130 may include the time between two successive selections of search results, the language employed by the user, a country where the user is likely located when performing a user interaction (e.g., based on a server used to access the search engine 108), and a location where the user is likely having a purchased item shipped to. In some implementations, prior user interaction data may comprise user interactions with a ranking displayed within an item listing, negative and positive feedback displayed with the item listing at the time of purchase (and the particular feedback viewed by the user at the time of purchase), and other data such as whether the user clicked or viewed another document associated with an item listing (e.g., a specification or a third-party webpage listed in the item listing). Other user interaction data including user cookies, cookie age, IP (Internet Protocol) address, user agent of the browser, and so forth, may also be stored in historical queries 130. In some embodiments, the prior user interaction data is recorded in the historical queries 130 for an entire user session or multiple user sessions.

The prior user interaction data stored in the historical queries 130 can be used by the search engine 108 for determining suggestions for one or more refinement options upon entry of a portion of a search query. Additional user interaction data stored after the user provides an indication to use one of the suggested refinement options may be used to improve future or additional determinations to suggest refinement options. Further, the historical queries 130 may comprise data sources or data systems, which are configured to make data available to any of the various constituents of operating environment 100. Historical queries 130 may be one or more discrete components separate from search engine 108 or may be incorporated or integrated into the search engine 108 or other components of the operating environment 100. Among other things, the historical queries 130 can store user interaction data performed in response to selecting the suggested refinement option, which can be indexed in historical queries 130 associated with the search engine 108.

Indexes stored in or associated with historical queries 130 can take the form of an inverted index, but other forms are possible. The one or more indexes stored at historical queries 130 may include the prior user interaction data associated with items in a manner that allows the search engine 108 to efficiently query the historical queries 130 based on the portion of the search query, as well as any additional information provided in conjunction with the portion of the search query (e.g., user information such as an IP address or profile information), in order to identify prior user interaction data for determining a refinement option. The search engine 108 can be configured to run any number of queries on the historical queries 130.

The one or more indexes stored at historical queries 130, according to an example embodiment, include named fields that enable access to one or more aspects, attributes, or categories associated with items that a user interacted with. For example, historical queries 130 may include an inverted index storing a mapping from a particular user or identified interests of a user to image data or text in items listings associated with prior user interaction data. For example, user interaction data associated with a particular attribute may be mapped to one or more identified interests of a user. In some embodiments, prior user interaction data by other users and associated with an attribute or category may be identified by the named fields for determining a refinement option for the portion of the search query.

In one embodiment, historical queries 130 may include one or more tables of hierarchical categories associated with meta-categories and leaf categories or one or more tables of hierarchical interests of the user associated with a leaf category. For example, the one or more tables may include an identifier field containing a unique category identifier or a unique interest identifier for each of a plurality of prior user interactions and a name field for a relevant category or interest. To illustrate, the identifier field for "Ford Raptor accessories" may be 8000 and the identifier field for "Ford Raptor fog light" may be 7001; and the identifier field for "WWII Dutch resistance book" may be 2000 and the identifier field for "WWII Dutch resistance books by Tim Brady" may be 2031. Furthermore, the name field may be associated with a statistical value corresponding to a number of purchases, a rating, or a number of views associated with an item listing. The statistical value may also be based on a number of views compared to the number of purchases. In some embodiments, the statistical value corresponds to item bids, item subscriptions, online shares, and so forth.

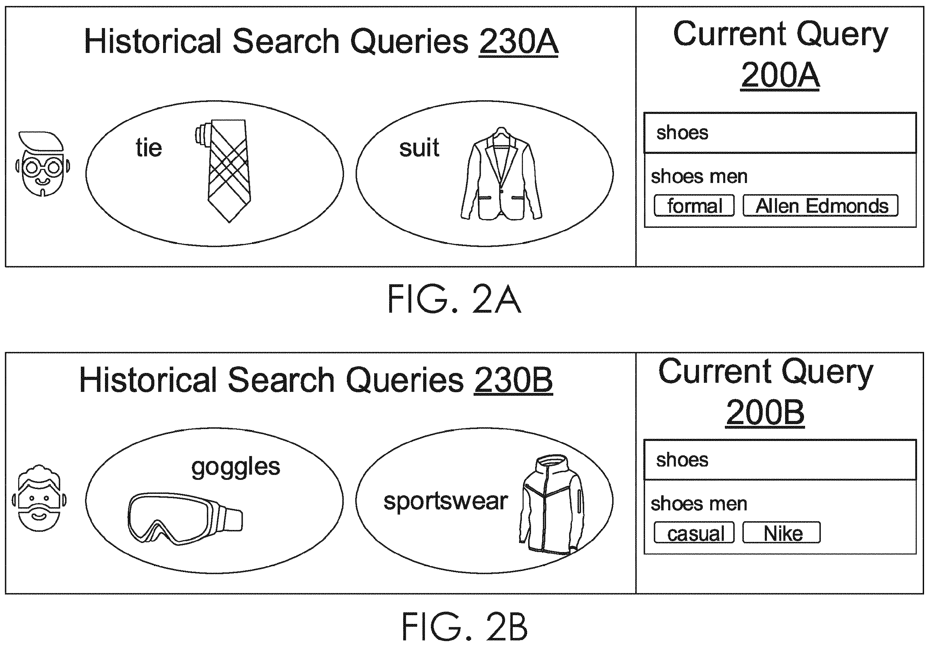

FIG. 2A depicts an example client interface component displaying a current portion of a search query 200A. In this example, the portion of the search query is "shoes." Example client interface component may be client interface component 106 depicted in FIG. 1. Upon receiving the portion of the search query "shoes" at a search engine for a site, such as search engine 108 in FIG. 1, for example; the search engine may determine a completed search query based on the portion of the search query. In this example, the completed search query is "men's shoes." The completed search query may be determined based on a user profile or historical search queries provided by the user. Upon determining the completed search query, the completed search query may be displayed on the client interface component.

The search engine may concurrently or subsequently determine a refinement option associated with the completed search query based on the historical search queries 230A. For example, the historical search queries may include a search query for a "tie" and a search query for a "suit." In embodiments, the refinement option is determined based on historical search queries resulting in the purchase of the tie or the suit. In some embodiments, the refinement option is determined based on the user "liking" the Allen Edmonds tie and the Allen Edmonds suit. In some embodiments, the user viewed both the Allen Edmonds tie and suit for a period of time over a threshold. In some embodiments, the user searched for the Allen Edmonds tie and suit over a threshold number of times within a particular time range (e.g., 15 views within the past two hours).

As such, the search engine determines to suggest a "formal" refinement option and an "Allen Edmonds" refinement option based on the historical search queries 230A. In response to determining these refinement options, the search engine provides these refinement options for display on the client interface component. The refinement options may be displayed concurrently with the completed search query. Additionally, the completed search query and the refinement options may be displayed prior to providing the user with search results and prior to the user submitting the portion of the query to receive search results.

FIG. 2B illustrates determining refinement options for a user different than the user of FIG. 2A based on the historical search queries of the user associated with FIG. 2B. For example, FIG. 2B depicts an example client interface component displaying a current portion of a search query 200B. In this example, the portion of the search query is "shoes." Example client interface component may be client interface component 106 depicted in FIG. 1. Upon receiving the portion of the search query "shoes" at a search engine for a site, such as search engine 108 in FIG. 1, for example; the search engine may determine a completed search query based on the portion of the search query. In this example, the completed search query is "men's shoes." The completed search query may be determined based on a user profile or historical search queries provided by the user. Upon determining the completed search query, the completed search query may be displayed on the client interface component.

The search engine may concurrently or subsequently determine a refinement option associated with the completed search query based on the historical search queries 230B. For example, the historical search queries may include a search query for "goggles" and a search query for "sportswear." In embodiments, the refinement option is determined based on historical search queries resulting in the purchase of one of the goggles or sportswear. In some embodiments, the refinement option is determined based on the user adding one of the goggles and the sportswear to an electronic shopping cart. In some embodiments, the user viewed various goggles and sportswear for a period of time over a threshold. In some embodiments, the user searched for the goggles and the sportswear over a threshold number of times within a particular time range (e.g., 32 views within the past hour).

As such, the search engine determines to suggest a "casual" refinement option and a "Nike" refinement option based on the historical search queries 230B. In response to determining these refinement options, the search engine provides these refinement options for display on the client interface component. The refinement options may be displayed concurrently with the completed search query. Additionally, the completed search query and the refinement options may be displayed prior to providing the user with search results and prior to the user submitting the portion of the query to receive search results.

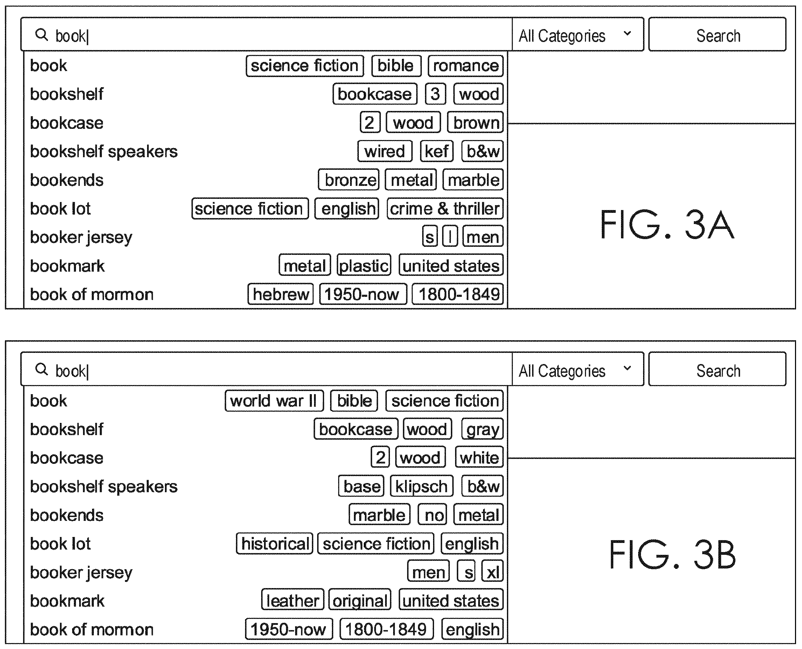

FIG. 3A depicts an example client interface component displaying a current portion of a search query "book." Example client interface component may be client interface component 106 depicted in FIG. 1. Upon receiving the portion of the search query "book" at a search engine for a site, such as search engine 108 in FIG. 1, for example; the search engine may determine a plurality of completed search queries based on the portion of the search query. In this example, the plurality of completed search queries include "book," "bookshelf," "bookcase," and so forth. The completed search queries may be determined based on a user profile or historical search queries provided by the user. Upon determining the completed search queries, the completed search queries are be displayed on the client interface component.

The search engine concurrently determines a plurality of refinement options for each of the completed search queries, the refinement options determined based on historical search queries by the user. For example, the historical search queries may include search queries for bibles, romance novels, and science fiction novels. In embodiments, the refinement options for the bookshelf query are determined based on historical search queries including bookcases, 3-shelved bookshelves, and wooden bookshelves. In some embodiments, the refinement options for the bookcase query are determined based on historical queries including wooden bookcases, bookcases sold in sets of two, and brown bookcases. In some embodiments, the refinement options for the booker jersey query are determined based on historical queries including purchases of small jerseys, a number of views of large jerseys, and purchases of men's jerseys.

As such, the search engine determines to suggest the plurality of refinement options for each of the completed search queries based on the historical search queries. In response to determining these refinement options, the search engine provides these refinement options for display on the client interface component. The refinement options may be displayed concurrently with the completed search queries. Additionally, the completed search queries and the refinement options may be displayed prior to providing the user with search results and prior to the user submitting the portion of the query to receive search results.

FIG. 3B depicts an example client interface component displaying a current portion of a search query "book." Example client interface component may be client interface component 106 depicted in FIG. 1. Upon receiving the portion of the search query "book" at a search engine for a site, such as search engine 108 in FIG. 1, for example; the search engine may determine a plurality of completed search queries based on the portion of the search query. In this example, the plurality of completed search queries include "book," "bookshelf," "bookcase," and so forth. The plurality of completed search queries depicted in FIG. 3B differ from FIG. 3A based on the differences in the historical search queries performed by the user of FIG. 3B and the user of FIG. 3A. Upon determining the completed search queries, the completed search queries are be displayed on the client interface component.

The search engine concurrently determines a plurality of refinement options for each of the completed search queries, the refinement options determined based on historical search queries by the user of FIG. 3B. For example, the historical search queries may include search queries for bibles, WWII books, and science fiction novels. In embodiments, the refinement options for the bookshelf query are determined based on historical search queries including bookcases, white bookcases or bookshelves, and wooden bookshelves or bookcases. In some embodiments, the refinement options for the bookcase query are determined based on historical queries including wooden room accents, a number of books previously purchased, and white room accents.

As such, the search engine determines to suggest the plurality of refinement options for each of the completed search queries based on the historical search queries. In response to determining these refinement options, the search engine provides these refinement options for display on the client interface component. The refinement options may be displayed concurrently with the completed search queries. Additionally, the completed search queries and the refinement options may be displayed prior to providing the user with search results and prior to the user submitting the portion of the query to receive search results.

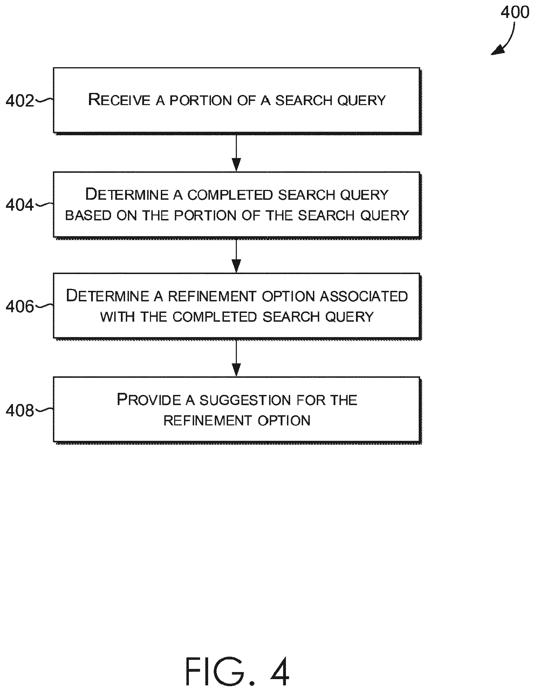

FIG. 4 is a flow diagram showing an example method 400 for providing a suggestion for a refinement option. The method 400 may be performed, for instance, by the search engine 108 of FIG. 1. As shown at block 402, a portion of a search query is received, for example, at a search engine for a site. In aspects, the portion of the search query is a portion of a word (e.g., "footb" for "football"). In some aspects, the portion of the search query is a portion of two or more words (e.g., "dill" for "dill pickles"). In some aspects, the search engine receives a search query from the user (e.g., "red apple"). The portion of the search query or the search query may be received from computing device 104 via client interface component 106 of FIG. 1. In aspects, the portion of the search query or the search query is an audio query or a textual query. In aspects, the input associated with the portion of the search query or the search query include words, numbers, symbols, or other alphanumeric characters.

A completed search query based on the portion of the search query is determined, as shown at block 404. The completed search query may be determined in response to determining whether the search query is a completed search query based on the input. Determining whether the search query is a completed search query may be based on a detected language or a language selected by a user. In aspects, the detected language is based on an association between two or more typed words. In aspects, the detected language is based on the language of an internationalized domain name. In aspects, identifying the portion of the search query is associated with the speed at which the user is typing.

The completed search query may be determined using various data from various sources. In some aspects, the completed search query is determined using data from historical queries 130 depicted in FIG. 1. In some aspects, the completed search query is determined using data stored within the computing device 104 depicted in FIG. 1. For example, the data may be accessed via an application stored on computing device 104, by opening a file stored on computing device 104, and so forth. The data used for determining the completed search query may be synchronized data between computing device 104 and another computing device associated with the same user, such as web browser bookmarks, for example. In aspects, the completed search query is determined by accessing a remote computing device over a network (e.g., network 102 of FIG. 1), such as a remote server having access to a database that stores web page searches associated with historical search queries made by the user of computing device 104 or other users. The portion of the search query may be associated with the historical search queries made by the user of computing device 104 or other users.

In embodiments, the completed search query is associated with an item. The item may be tangible (e.g., a chess set), intangible (e.g., an access code to use software), or something that has a distinct and separate existence from other things (e.g., an electronic book). In embodiments, the item is associated with aspects. The aspects may be related to the appearance of the item. For example, the item may be a chessboard having aspects comprising a reflective green color that compliments a modern-furnished room. As another example, a software item may include aspects of picture-editing features that provide particular black and white effects. In some embodiments, the item is associated with attributes. An attribute, for example, is related to a characteristic or quality of the item. The chessboard item, for example, has attributes comprising marble material from a particular mountain range that has a particular density. The software item, for example, has attributes including a compatibility with a particular operating system (such as nuclear magnetic resonance data processing software compatible with a particular nuclear magnetic resonance spectrometer system, for instance).

At block 406, one or more refinement options associated with the completed search query are determined based on historical queries. The historical queries and data associated with the historical queries may be stored in one or more accessible databases (e.g., historical queries 130). The historical queries and the data associated with the historical queries may be associated with the user and with one or more other users. In addition, the refinement option provides a function associated with narrowing search results associated with the completed search query (e.g., recommending a search query for "baroque style picture frames" instead of "picture frames"). For example, the refinement option narrows results that are more relevant to the user's interests or results that are more relevant to an intended goal of the user. The refinement option may be determined using prior user interactions data stored in the one or more accessible databases.

Prior user interactions may include a user's recent interactions (e.g., interactions within the same day or week) with the search engine. The user interactions may comprise purchases, views, and clicks associated with a plurality of refinement options associated with the completed search query. For example, if the user previously searched for a "picture frame" and selected a refinement option for a particular frame thickness for the picture frame query, and subsequently clicked on various baroque style picture frames at a higher rate than other styles of picture frames within the search results; the refinement option of "baroque style picture frames" for the initial completed search query of "picture frames" would be determined from these prior user interactions.

In aspects, the prior user interactions with the site are determined by storing the user's interactions based on the user being logged in on a personalized account with the site. In some aspects, the prior user interactions with the site are determined using stored interaction data associated with an IP address. In some aspects, prior user interactions include viewing item listings associated with search results upon clicking or selecting various search results from prior queries associated with the completed search query. In some aspects, the prior user interactions additionally include providing a rating for the selected search result. In some aspects, the prior user interactions additionally include purchases of a higher ratio of used items compared to new items associated with the completed search query. In some aspects, the prior user interactions additionally include purchases or selections of a higher ratio of a particular brand compared to other brands associated with the completed search query. In some aspects, the refinement option is determined using a refinement option having the highest number of selections compared to other refinement options selected by other users (e.g., a refinement option for a particular brand for a completed search query including a vacuum cleaner for pet hair).

In aspects, the association between the completed search query and prior user interactions is based on a keyword of the completed search query, an item associated with the completed search query, related items of the item of the completed search query, or a relationship between prior search queries of the prior user interactions and the completed search query. For example, a "desk lamp" query and a "nightstand lamp" query have a relationship stronger than the relationship between the "desk lamp" query and a "floor lamp" with respect to size and placement. As another example, prior user interactions with items having the keywords of a particular sports team may be relevant for determining the refinement option for the completed search query having the keyword of the particular sports team (e.g., the user purchased used jerseys within a particular price range for that team and is now searching for shirts for that team).

In aspects, the prior user interactions (of the user or of the one or more other users) associated with the completed search query are ranked based on a similarity score. For example, search results associated with the prior user interactions may each have an item listing that includes a description relating to an item and one or more images of the item. The description may comprise one or more of a price in a currency, reviews from other users or purchasers, shipment options, a rating, a condition of the item, a size of the item, a color of the item, etc. The similarity score may be determined using the description or the one or more images of the item. For example, one or more images of the item listings associated with the prior user interactions may be ranked by a visual image similarity measure determined using a distance value between an image signature of the one or more images and an image associated with the completed search query. As another example, the similarity score may be determined by comparing a predicted leaf-category associated with the completed search query with keywords within the descriptions of the item listings associated with the prior user interactions. As such, the refinement option may be determined based on the rankings of the similarity scores.

In some embodiments, a set of prior user interactions by the user, other users, or other similar users are identified based on having a similarity score to the completed search query above a threshold. The other similar users may be identified by analyzing user browsing data across various websites and pages (e.g., the browsing data from a server associated with a browser plug-in associated with user devices), user views and purchases associated with the search engine, or demographic information associated with users (e.g., gender, age, location information at the time of a prior query, location information associated with a home address or shipping destination, etc.). In some embodiments, a clustering algorithm may be used for determining the similarity score for the set of prior user interactions to the completed search query. The threshold may dependent upon the completed search query. For example, a completed search query that is broader than another completed search query may have a higher threshold so that one or more processors may determine similarity scores faster. The refinement option is then determined based on the set of the prior user interactions having the similarity score above the threshold.

In some embodiments, a plurality of aspects associated with the completed search query are determined from the historical queries. As discussed above with respect to block 404, the plurality of aspects may be related to the appearance of the item. For example, the plurality of aspects may be identified within item listings associated with the historical queries and extracted upon identification. The extracted aspects may be ranked based on user interactions with each aspect. For example, aspects associated with a higher purchase rate are ranked higher than aspects associated with a lower purchase rate. As another example, aspects associated with a lower total rating are ranked lower than aspects associated with a higher total rating, the total rating being determined from purchaser feedback. As such, the refinement option may be determined based on a highest ranked aspect of the plurality of aspects.

In some embodiments, a plurality of attributes associated with an item of the completed search query are determined from the historical queries. As discussed above with respect to block 404, the plurality of attributes are related to a characteristic or quality of the item. For example, the plurality of attributes may be identified within item listings associated with the historical queries and extracted upon identification. The extracted attributes may be ranked based on user interactions with each attribute. User interactions with each attribute by other users may be identified. The user interactions of the user for one attribute may be compared to the user interactions of the other users for the one attribute. For example, attributes having a higher number of views are ranked higher than attributes associated with a lower number of views. Continuing the example, the number of views by the user for items associated with an attribute may be compared to the number of views by the other users (e.g., the comparison indicating that the user may be interested in a new popular trend in a style associated with the completed search query). As another example, attributes associated with a lower number of purchases are ranked lower than attributes associated with a higher number of purchases. As such, the refinement option may be determined based on a highest ranked attribute of the plurality of attributes.

In some embodiments, a set of user interactions by other users are identified based on one or more attributes associated with the completed search query. In some embodiments, a set of user interactions by other users are identified based on one or more aspects associated with the completed search query. In some aspects, a set of similar users are identified from the other users by analyzing user profile data (e.g., users who are registered with the site associated with the search engine have user profile data comprising one or more of a gender, a birth date, a shipping address, etc.) and comparing the user profile data with user profile data of the user associated with the completed search query. Upon identification of the set of user interactions (by the other users or by the set of similar users), the set of user interactions are compared with prior user interactions by the user associated with the completed search query. The refinement option is then determined based on the comparison.

In some embodiments, a plurality of interests of the user are identified based on interactions that the user made with the site. For example, the user may have searched for and purchased formal clothing a number of times exceeding a threshold within a time period (e.g., such as within the past month or within the past season). Continuing the example, the formal clothing the user purchased included a plurality of shirts of a particular style. Further, the plurality of interests may be ranked based on a relevance to the completed search query (e.g., the formal clothing of the particular style would be ranked higher than another style for a search query associated with the completed search query "women's shirts"). Various models may be used for determining the relevance of the plurality of interests to the completed search query (e.g., a machine learning model, a neural network, etc.). In embodiments, query and interest pairs are represented by feature vectors for distance measuring via a vector space model. The feature vectors may comprise metrics (e.g., BM25). In embodiments, a multi-leveled relevance analysis is performed using an item leaf category and semantic vector similarity between the completed search query and an interest. In response to ranking the plurality of interests based on the relevance, the refinement option is determined using a highest ranked interest.

In some embodiments, user interests are determined by analyzing patterns of prior user interaction data. For example, one user's user interaction data may indicate that the user has an interest in historical non-fiction books during a certain era, wherein the user interaction data indicating this interest includes a number of views, clicks, or purchases that meet a threshold. As another example, another user's user interaction data may indicate that the user has an interest in a particular series of comic books based on purchases or views. In some aspects, an identified pattern of the prior user interaction data may additionally be analyzed for a day or time that an item associated with the pattern was viewed or purchased, a duration that the item was viewed, a leaf category associated with the item, and so forth. In some aspects, prior user interaction data may be aggregated for subsequent mining to determine patterns or differences among various aggregated groupings. For example, a pattern between aggregated summer clothing purchases and aggregated winter clothing purchases may include a particular brand or color scheme.

As such, by extracting prior user interaction data based on user interactions with the site, a set of interests of the user may be identified based on patterns analyzed within the prior user interaction data. At least one of the identified interests may then be associated with a current search query being typed by the user. Refinement options may then be determined using the interests identified that are associated with the current search query being typed. Refinement options determined based on an interest that have a stronger association with the current search query being typed than other refinement options based on other interests may be determined.

As shown at block 408, a suggestion for the refinement option is provided prior to a submission of the completed search query (e.g., prior to a user pressing the enter key). The suggestion may be provided prior to the user completely typing the completed search query. Additionally, the refinement option may be displayed to the user prior to providing the user with the search results. The suggestion may be displayed on a user interface below or beside the search query entry display where the user types the search query, for example. In some embodiments, a suggestion for a completed search query is also displayed concurrently with the suggestion of the refinement option. In some aspects, a plurality of suggested refinement options are displayed. In some aspects, the plurality of refinement options are provided in a listed order based on prior user interactions of the user or prior user interactions of other users.

In some aspects, in response to providing the suggestion for the refinement option to the user, a selection or indication to use the refinement option is received. In some aspects, in response to providing the plurality of refinement options in the listed order to the user, a selection or indication to use one or more of the plurality of refinement option is received. In response to receiving the selection or the indication to use one or more refinement options, a search associated with the completed search query and the refinement option is performed and search results are provided. The search results provided more closely reflect an intent of the user compared to a search using the completed search query without the refinement option selected.

With reference to FIG. 5, computing device 500 includes a bus 510 that directly or indirectly couples the following devices: memory 512, one or more processors 514, one or more presentation components 516, one or more input/output (I/O) ports 518, one or more I/O components 520, and an illustrative power supply 522. Bus 510 represents what may be one or more busses (such as an address bus, data bus, or combination thereof). Although the various blocks of FIG. 5 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 5 is merely illustrative of an exemplary computing device that can be used in connection with one or more aspects of the present technology. Distinction is not made between such categories as "workstation," "server," "laptop," "handheld device," etc., as all are contemplated within the scope of FIG. 5 and with reference to "computing device."

Computing device 500 typically includes a variety of computer-readable media. Computer-readable media can be any available media that can be accessed by computing device 500 and includes both volatile and nonvolatile media, removable and non-removable media. By way of example, and not limitation, computer-readable media may comprise computer-storage media and communication media.

Computer-storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 500. Computer storage media does not comprise signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 512 includes computer storage media in the form of volatile and/or nonvolatile memory. The memory may be removable, non-removable, or a combination thereof. Exemplary hardware devices include solid-state memory, hard drives, optical-disc drives, etc. Computing device 500 includes one or more processors 514 that read data from various entities such as memory 512 or I/O components 520. Presentation component(s) 516 presents data indications to a user or other device. Exemplary presentation components include a display device, speaker, printing component, vibrating component, and the like.

The I/O ports 518 allow computing device 500 to be logically coupled to other devices, including I/O components 520, some of which may be built in. Illustrative components include a microphone, joystick, game pad, satellite dish, scanner, printer, wireless device, etc.

The I/O components 520 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 500. The computing device 500 may be equipped with depth cameras, such as stereoscopic camera systems, infrared camera systems, RGB camera systems, and combinations of these, for gesture detection and recognition. Additionally, the computing device 500 may be equipped with accelerometers or gyroscopes that enable detection of motion. The output of the accelerometers or gyroscopes may be provided to the display of the computing device 500 to render immersive augmented reality or virtual reality.

Some aspects of computing device 500 may include one or more radio(s) 524 (or similar wireless communication components). The radio 524 transmits and receives radio or wireless communications. The computing device 500 may be a wireless terminal adapted to receive communications and media over various wireless networks. Computing device 500 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

## Claims

1. A computer implemented method comprising:
receiving, at a search engine for a site, a portion of a search query from a user;
determining a completed search query based on the portion of the search query;
determining a refinement option associated with the completed search query based on historical queries; and
providing a first suggestion for the completed search query and a second suggestion for the refinement option.

2. The method of claim 1, wherein determining the refinement option further comprises:
determining a plurality of aspects associated with the completed search query from the historical queries;
ranking the plurality of aspects based on user interactions with each aspect in the historical queries; and
determining the refinement option based on a highest ranked aspect of the plurality of aspects,
wherein, optionally, the user interactions comprise purchases, views, and clicks associated with a plurality of refinement options associated with the completed search query.

3. The method of claim 1, further comprising:
identifying prior user interactions with the site by the user; and
determining the refinement option based on the prior user interactions with the site by the user.

4. The method of claim 3, further comprising:
ranking the prior user interactions based on a similarity score associated with the completed search query; and
determining the refinement option based on the rankings.

5. The method of claim 3 or 4, wherein the historical queries comprise a plurality of user interactions with the site by one or more other users, and wherein determining the refinement option further comprises:
identifying a set of the plurality of user interactions associated with an attribute related to an item associated with the completed search query;
comparing the prior user interactions with the site by the user with the set of the plurality of user interactions; and
selecting the refinement option based on the comparison,
wherein, optionally, the one or more other users are identified based on historical interactions with items associated with the completed search query, and wherein the set of the plurality of user interactions include user interactions with the site by the one or more other users.

6. One or more non-transitory computer storage media storing computer-readable instructions that when executed by a processor, cause the processor to perform operations, the operations comprising:
receiving, at a search engine for a site, a search query from a user;
determining whether the search query is a completed search query based on the search query received;
determining a refinement option associated with the completed search query based on historical queries; and
providing a first suggestion for the refinement option.

7. The one or more non-transitory computer storage media of claim 6, further comprising:
upon determining that the search query is an incomplete search query, providing a second suggestion for the completed search query.

8. The one or more non-transitory computer storage media of claim 6 or 7, further comprising:
identifying a plurality of interests of the user based on user interactions with the site by the user, the user interactions associated with the historical queries;
ranking the plurality of interests based on a relevance to the completed search query; and
determining the refinement option based on a highest ranked interest of the plurality of interests.

9. The one or more non-transitory computer storage media of claims 6 or 7, further comprising:
identifying attributes related to an item associated with the completed search query;
identifying a plurality of user interactions with the site by a plurality of other users, the plurality of user interactions associated with the historical queries and the attributes;
ranking the attributes based on a number of the plurality of user interactions associated with each of the attributes; and
determining the refinement option based on a highest ranked attribute of the ranked attributes,
wherein, optionally, the plurality of user interactions comprise purchases associated with a selection of one or more refinement options associated with the completed search query.

10. The one or more non-transitory computer storage media of claims 6 or 7, further comprising:
identifying, from data associated with the historical queries, a plurality of refinement options selected by a plurality of other users, the plurality of refinement options related to items associated with the completed search query; and
determining the refinement option based on a highest selected refinement option of the plurality of refinement options selected by the plurality of other users.

11. The one or more non-transitory computer storage media of claims 6 or 7, further comprising:
identifying prior user interactions with the site by the user;
identifying a set of the prior user interactions having a similarity score above a threshold, the similarity score being associated with the completed search query; and
determining the refinement option based on the set of the prior user interactions having the similarity score above the threshold.

12. A system comprising:
at least one processor; and
one or more computer storage media storing computer-readable instructions that when executed by the at least one processor, cause the at least one processor to perform operations comprising:
receiving, at a search engine for a site, a portion of a search query from a user;
determining a completed search query based on the portion of the search query;
determining a refinement option associated with the completed search query based on historical queries; and
providing a first suggestion for the refinement option prior to the user submitting the completed search query for search results.

13. The system of claim 12, further comprising providing a second suggestion for the completed search query.

14. The system of claim 12 or 13, wherein determining the refinement option further comprises:
extracting prior user interaction data based on user interactions with the site by the user, the prior user interaction data associated with the historical queries;
identifying a set of interests of the user based on patterns analyzed within the prior user interaction data;
associating at least one of the set of interests of the user to the completed search query; and
using the prior user interaction data associated with the at least one of the set of interests to determine the refinement option.

15. The system of claim 12 or 13, wherein determining the refinement option further comprises:
determining a plurality of aspects associated with the completed search query from the historical queries;
ranking the plurality of aspects based on user interactions of other users with each aspect in the historical queries; and
determining the refinement option based on a highest ranked aspect of the plurality of aspects,
wherein, optionally, the user interactions comprise purchases, views, and clicks associated with a plurality of refinement options associated with the completed search query,
wherein the system optionally further comprises selecting the user interactions for ranking the plurality of aspects based on a number of each of the purchases, views, and clicks being above a threshold.
